# EUROPEAN PATENT APPLICATION

(11) **EP 4 290 369 A1**
(43) Date of publication of application: **13.12.2023**
(21) Application number: 22177616.4
(22) Date of filing: 07.06.2022
(51) Int. Cl.: G06F 8/65

(54) **ELECTRONIC CIRCUIT FOR A VEHICLE**

(71) Applicant: Valeo Internal Automotive Software Egypt, a limited liability company, Giza, Cairo (EG)
(72) Inventor: MAHDY, Alaa, Giza, Cairo (EG); SALAMA, Mohamed, Giza, Cairo (EG); ELBAZ, Mostafa, Giza, Cairo (EG)
(74) Representative: Hofstetter, Schurack & Partner

(57) **Abstract**

An electronic circuit (3) for a vehicle (1) comprises a network interface (7) for connecting the electronic circuit (3) to a communication network and a hardware component (6) with a hardwired logic to receive at least one data packet representing a software program from the communication network via the network interface (7) according to a predefined communication protocol. The electronic circuit (3) comprises a memory interface (13) connected to the hardware component (6), wherein the hardware component (6) is adapted to store the software program to a non-volatile memory (8) via the memory interface (13), and a processing unit (5), which is configured to read the non-volatile memory (8) and to execute the software program.

## Description

The present invention is directed to an electronic circuit for a vehicle, to an electronic control unit for a vehicle and to a method for operating an electronic circuit of a vehicle.

Electronic circuits in vehicles, in particular motor vehicles, may for example be contained in electronic control units, ECUs, of the vehicle and may contain a processing unit, such as a central processing unit, CPU, to execute a particular software program stored on a non-volatile memory of the vehicle or the electronic circuit.

In order to fix software bugs or to introduce improvements in the software, the software stored on the non-volatile memory may have to be updated. Such software updates may for example be carried out at a service point via a diagnostics interface of the vehicle or by means of an over-the-air, OTA, update. Also for other reasons, the software may be replaced or a new software may be stored.

In conventional ECUs, a software module of the CPU, which is for example denoted as a bootloader, may be used to update the software in the non-volatile memory. However, when the bootloader or another component of the CPU receives the respective data packets for updating the software program, the overall processing load for the CPU is increased, which may affect the normal operation of the CPU negatively, in particular in case the CPU is executing a previous version of the software program during receiving the data packets for the software update.

It is an objective of the present invention to provide an improved concept for storing a software program to be executed by a processing unit of a vehicle's electronic circuit, which reduces the processing load of the processing unit while receiving the data corresponding to the software program.

This objective is achieved by the respective subject matter of the independent claims. Further implementations and preferred embodiments are subject matter of the dependent claims.

The invention is based on the idea to provide, in addition to the processing unit of an electronic circuit for a vehicle, a hardware component including a hardwired logic, wherein the hardwired logic circuit, which is also denoted as hardwired logic in the following, encodes a predefined communication protocol to receive data packets representing a software program from a communication network.

According to an aspect of the invention an electronic circuit for a vehicle is provided. The electronic circuit comprises a network interface for connecting the electronic circuit to a communication network. The electronic circuit comprises a hardware component including a hardwired logic, which is adapted to receive at least one data packet representing a software program from the communication network via the network interface according to a predefined communication protocol, which is, in particular, encoded by means of the hardwired logic. The electronic circuit comprises a memory interface connected to or comprised by the hardware component, wherein the hardware component is adapted to store the software program to a non-volatile memory, in particular a non-volatile memory of the vehicle or the electronic circuit, via the memory interface. The electronic circuit comprises a processing unit, which is configured to read the non-volatile memory and to execute the software program.

The communication network may be a wireless communication network or radio communication network. In this case, the at least one data packet may for example be sent from a server computer via the communication network and the network interface to the electronic circuit. Alternatively, the communication network may be a wire-based or wired communication network, for example a communication bus of the vehicle, such as a CAN bus or an ethernet network. In this case, the at least one data packet may be sent from a computing device, which is external to the vehicle, via the communication network and the network interface to the electronic circuit. The computing device may be connected to the communication network or the vehicle bus based on a wired connection or based on a wireless connection.

The processing unit may read the non-volatile memory via the memory interface or via a further memory interface of the electronic circuit. The hardware component is not a part of the processing unit and the processing unit is not a part of the hardware component. However, the hardware component and the processing unit may be implemented on a common platform. For example, the electronic circuit may comprise a microcontroller or a system-on-a-chip, SoC, which contains the processing unit, the hardware component, the memory interface and the network interface.

In some implementations, the processing unit and the hardware component may also be connected to each other via a further interface of the electronic circuit.

For executing the software program, the processing unit may for example load the software program to a further memory device of the electronic circuit, which may for example be a volatile memory and/or a random-access memory of the electronic circuit.

The communication protocol may for example define one or more services for exchanging data and, in particular, for receiving the at least one data packet via the communication network. The communication protocol may for example define, which kind of services are available and how they are executed. The communication protocol as such may be known or standardized. For example, the communication protocol may be a unified diagnostics services, UDS, communication protocol as specified in the industrial standard ISO14229. However, also other communication protocols may be used.

Due to the hardwired logic, the hardware component does not require a software module to receive the at least one data packet. However, the hardware component may, nevertheless, comprise one or more software modules in order to realize other functionalities. For example, the hardware component may comprise a software module, which is adapted or programmed to store the software program to the non-volatile memory via the memory interface. Alternatively, the hardwired logic may also encode the functionality of the hardware component to store the software program to the non-volatile memory.

In the electronic circuit according to the invention, the functionality for storing the software program to the non-volatile memory, for example in order to update existing previous software programs in the non-volatile memory or, in other words, for flashing a new software version to the non-volatile memory, is outsourced from the processing unit, which is for example a CPU of the electronic circuit, to the hardware component. Consequently, the processing load for the processing unit is reduced. In consequence, the processing unit may use its full capabilities to execute a further software program, in particular a previous version of the software program, while the at least one data packet is being received from the communication network. Consequently, the normal operation of the electronic circuit may be upheld without significant restrictions during the receiving of the at least one data packet, for example via an OTA update.

Since the functionality of receiving the at least one data packet is encoded by means of the hardwired logic rather than by means of a software, the robustness of the functionality may be significantly increased and the whole update process may be more deterministic.

In particular, the effort for programming software when developing a new generation or new version of the electronic circuit may be reduced since the hardware component with the hardware configuration may be used as a standard component for different purposes. Therein, it may be exploited that the communication protocol is usually standardized amongst different applications and vehicle manufactures or suppliers.

Effectively, the hardware component with its hardwired logic may therefore take over the functionality of a bootloader software of the processing unit or another the functionality of software module of the processing unit for updating the software program, for example over the air or in a wire-based manner.

It is noted that, even though the hardware component includes the hardwired logic, which corresponds to the communication protocol, the hardware component may still be additionally configurable or, in other words, tunable. Thus, one or more building blocks of the hardware component may contain a respective updatable configuration or, in other words, tunable parameters. The updatable configuration or tunable parameters may for example be stored in one or more configuration registers of the hardware component.

In this way, for example, an identificator or ID of the electronic circuit or of a superordinate unit of the vehicle containing the electronic circuit, such as an electronic control unit, ECU, of the vehicle, may be stored in terms of the updatable configuration or tunable parameters. Different identificators or IDs may then be stored in respective hardware components of different electronic circuits. In consequence, for example messages which are meant for a particular electronic circuit or ECU may be identified and other messages may be ignored.

The hardwired logic can therefore also be denoted as a hardwired configuration corresponding to the communication protocol, which does, however, not exclude said updatable configuration or tunable parameters for further purposes.

According to several implementations, the electronic circuit comprises the non-volatile memory.

In some implementations, the electronic circuit is implemented as a microcontroller or as an SoC.

In implementations where the electronic circuit comprises the non-volatile memory, the microcontroller or SoC may therefore comprise the non-volatile memory.

In alternative implementations, the electronic circuit comprises a microcontroller or SoC and comprises the non-volatile memory but the non-volatile memory is not a part of the microcontroller or SoC. In such implementations, the microcontroller or SoC may comprise at least the hardware component, the processing unit, the memory interface and the network interface.

According to several implementations, the processing unit is implemented as a central processing unit, CPU, in particular a CPU of the microcontroller or SoC.

According to several implementations, the hardware component comprises or is implemented as a hardware peripheral or as a hardware IP-block, in particular of the microcontroller or SoC.

The hardware component may for example comprise a graphics processing unit, GPU, a co-processor or a field-programmable gate array, FPGA.

According to several implementations, the hardware component is adapted to store the software program to the non-volatile memory via the memory interface by means of the hardwired logic.

In other words, the hardwired logic also encodes the functionality of the hardware component to store the software program to the non-volatile memory via the memory interface.

According to several implementations, the hardware configuration implements one or more services according to the communication protocol.

The one or more services may for example include a request download service, a request file transfer service, a transfer data service, and/or a request transfer exit service. Such services are for example defined according to the UDS communication protocol. The corresponding service IDs, SID, according to the UDS communication protocol are 0x34, 0x38, 0x36 and 0x37, respectively.

In this way, a widely accepted and standardized communication protocol may be realized, which increases the flexibility for using the electronic circuit.

According to several implementations, the electronic circuit comprises a hardware security module, HSM. The hardware component comprises an HSM-interface, which is connected to the HSM. The HSM is configured to verify the at least one data packet, in particular to verify an authenticity of the at least one data packet.

The HSM may use methods for verification, which are known per se. However, the hardware component may be adapted to request the verification of the at least one data packet by the HSM and may store the software program to the non-volatile memory depending on a result of the verification. In particular, the hardware component may store the software program to the non-volatile memory only if the verification is successful.

The functionality of the hardware component to request the verification by the HSM may also be encoded by the hardwired logic. In this way, the security may be improved.

According to several implementations, the network interface is designed as a network interface for wireless data communication.

In alternative implementations, the network interface is designed as a bus-interface for a communication bus of the vehicle, for example as a CAN or CANFD interface or an ethernet interface.

According to a further aspect of the invention, an electronic control unit, ECU, for a vehicle is provided, wherein the ECU comprises an electronic circuit according to an implementation of the invention.

According to a further aspect of the invention, a method for operating an electronic circuit of a vehicle, in particular an electronic circuit according to the invention, is provided. The method comprises receiving at least one data packet representing a software program from a communication network, in particular via a network interface of the electronic circuit, by a hardware component of the electronic circuit, wherein the hardware component includes a hardwired logic, which encodes a predefined communication protocol for receiving the at least one data packet. The method comprises storing the software program to a non-volatile memory of the electronic circuit or the vehicle by the hardware component, in particular via a memory interface of the electronic circuit. The method comprises reading the non-volatile memory and executing the software program by a processing unit of the electronic circuit.

According to several implementations of the method, a further software program is executed by the processing unit while the at least one data packet is received by the hardware component.

The further software program may for example be a previous version of the software program. In this way the normal operation of the processing unit may be upheld while the software is being updated.

According to several implementations, the at least one data packet is received from a server computer via the communication network in a wireless manner, in particular during an OTA update process.

According to several implementations of the method, the at least one data packet is received from a computing device external to the vehicle via a communication BUS of the vehicle.

Further implementations of the method according to the invention follow directly from the various embodiments of the electronic circuit according to the invention and vice versa. In particular, individual features and corresponding explanations as well as advantages relating to the various implementations of the electronic circuit according to the invention can be transferred analogously to corresponding implementations of the method according to the invention. In particular, the electronic circuit according to the invention is designed or programmed to carry out the method according to the invention. In particular, the electronic circuit according to the invention carries out the method according to the invention.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, may also be comprised by the invention. Moreover, embodiments and combinations of features which go beyond or deviate from the combinations of features set forth in the recitations of the claims may be comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures:
- Fig. 1: shows schematically a vehicle with an exemplary implementation of an electronic circuit according to the invention; and
- Fig. 2: shows schematically a block diagram of a further exemplary implementation of an electronic circuit according to the invention.

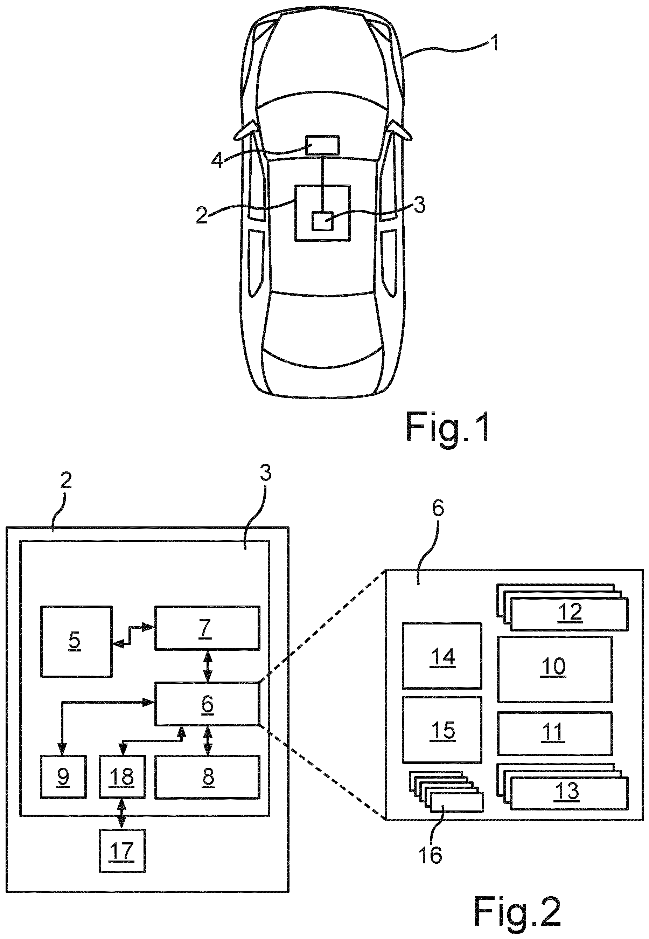

Fig. 1 shows schematically a vehicle 1, for example a passenger car, which comprises an exemplary implementation of an electronic circuit 3 according to the invention. For example, the electronic circuit 3 may be part of an electronic control unit, ECU, 2 of the vehicle 1.

The electronic circuit 3 may for example be implemented as a microcontroller or an SoC of the ECU 2. Depending on the actual implementation, the ECU 2 and, in consequence, the electronic circuit 3, may be used for different purposes, for example as a part of an electronic vehicle guidance system, such as an advanced driver assistance system, ADAS, or an autonomous driving system, ADS, and/or in order to control a sensor device 4, an actuator or a motor of the vehicle 1 et cetera.

Fig. 2 shows schematically a block diagram of an exemplary implementation of the electronic circuit 3 for use in a vehicle 1 as described with respect to Fig. 1.

The electronic circuit 3 comprises a network interface 7 for connecting the electronic circuit 3 to a communication network, for example a wireless or radio network or a wire-based communication bus of the vehicle 1.

The electronic circuit 3 comprises a hardware component 6, for example a hardware peripheral or a hardware IP-block of the microcontroller or SoC, which contains a hardwired logic circuit or hardwired logic. The hardwired logic encodes a functionality of the hardware component 6 to receive at least one data packet representing a software program from the communication network via the network interface 7 according to a predefined communication protocol, such as for example an UDS communication protocol.

The electronic circuit 3, in particular the hardware component 6, further comprises a memory interface 13, which is connected or connectable to a non-volatile memory 8 of the electronic circuit 3 and/or a non-volatile memory 17 of the ECU 2 via a further memory interface 18 of the electronic circuit 3. The hardware component 6, in particular the hardwired logic, is adapted to store the software program to the non-volatile memory 8 via the network interface 13.

The electronic circuit 3 further comprises a processing unit 5, for example a CPU, which is configured to read the non-volatile memory 8, for example via the memory interface 13 or via a further memory interface (not shown), and to execute the software program accordingly.

For example, the hardwired logic of the hardware component 6 may be implemented in a protocol processing logic block 10 of the hardware component 6. Furthermore, in some implementations, the hardware component 6 may comprise a buffer 11 for intermediate storage of parts of the at least one data packet after receiving it from the communication network and before storing it to the non-volatile memory 8.

In some implementations, the hardware component 6 may also comprise a packet filter module 12, wherein the protocol processing logic block 10 is connected to the network interface 7 via the packet filter module 12.

The hardware component 6 may in some implementations also comprise a CPU-interface 15, which connects the hardware component 6 to the processing unit 5. In this case, this processing unit 5 may for example set additional configurations of the hardware component 6, for example to define a storage location of the non-volatile memory 8 for storing the software program by the hardware component 6.

In some implementations, the electronic circuit comprises a hardware security module, HSM, 9 and the hardware component 6 comprises an HSM-interface 14, which connects the HSM 9 to the protocol processing logic block 10. After receiving a data packet of the at least one data packet, the protocol processing logic block 10 may therefore request a verification of the data packet by the HSM 9. Alternatively, the verification may be requested only after all data packets of the at least one data packet have been received.

It is noted that, apart from the protocol processing logic block 10, also other building blocks of the hardware component 6, for example the additional memory interface 13, the HSM-interface 14, the CPU-interface 15 and/or the packet filter module 12 may contain respective further hardware logic circuits adapted to carry out their respective tasks.

The hardware component 6 may, however, be configurable or tunable in the sense that, apart from the hardwired logic corresponding to the communication protocol, a configurable configuration or respective tunable parameters may be provided, for example in one or more configuration registers 16 of the hardware component 6.

As described, in particular with respect to the figures, according to some implementations of the invention, a bootloader functionality of an ECU or a microcontroller or SoC to update existing software programs may be replaced by a hardwired logic in a hardware component separate to the CPU. Standard UDS flashing sequences over CAN, CANFD or ethernet may therefore be implemented in a generic manner.

The hardwired logic of the hardware component may for example automatically receive the relevant diagnostic identifiers, DID, and/or response identifiers, RID, which are responsible for the flashing sequence and write the received image representing the software program to an allocated location in the non-volatile memory, for example the flash memory, for example after verifying it.

Consequently, development costs and effort may be reduced. By implementing the boot loader functionality by hardware, it may be highly standardized and error free.

Furthermore, implementations of the invention may allow to keep the normal operation running on the processing unit or CPU while an OTA image is received in terms of the at least one data packet. Consequently, it may be avoided that the performance of the CPU is impaired. In other words, the OTA update functionality may be offloaded from a CPU and moved to a hardware component. Consequently, the OTA functionality may become more deterministic.

In some implementations, the hardware component may have a direct connection to the network interface or network controller and the memory interface or memory controller to receive the at least one data packet in terms of an image and write it to a redundant partition of the non-volatile memory.

Implementations of the invention may also be used to realize an eSync compatible OTA software update. The eSync compliance may for example be specified by the regulations of UNECE WP.29 UN-R156. The hardware component may for example receive the corresponding eSync messages directly through the network interface.

A packet filter may for example be provided and configured to only route the eSync messages to the hardware component and to route the rest of the data traffic to the CPU. Once the hardware component receives the eSync messages, it may process them and pass a new image to the non-volatile memory via the memory interface.

## Claims

1. Electronic circuit (3) for a vehicle (1), comprising
- a network interface (7) for connecting the electronic circuit (3) to a communication network;
- a hardware component (6) including a hardwired logic to receive at least one data packet representing a software program from the communication network via the network interface (7) according to a predefined communication protocol;
- a memory interface (13) connected to or comprised by the hardware component (6), wherein the hardware component (6) is adapted to store the software program to a non-volatile memory (8) via the memory interface (13); and
- a processing unit (5), which is configured to read the non-volatile memory (8) and to execute the software program.

2. Electronic circuit (3) according to claim 1, wherein the processing unit (5) is implemented as a central processing unit, CPU.

3. Electronic circuit (3) according to one of the preceding claims, wherein the hardware component (6) comprises
- a graphics processing unit, GPU; or
- a co-processor; or
- a field-programmable gate array, FPGA.

4. Electronic circuit (3) according to one of the preceding claims, wherein the hardware component (6) is adapted to store the software program to the non-volatile memory (8) via the memory interface (13) by means of the hardwired logic.

5. Electronic circuit (3) according to one of the preceding claims, wherein the hardware configuration implements one or more services according to the communication protocol.

6. Electronic circuit (3) according to one of the preceding claims, wherein the electronic circuit (3) comprises a hardware security module, HSM, (9) and the hardware component (6) comprises an HSM-interface (14) connected to the HSM (9), wherein the HSM (9) is configured to verify the at least one data packet.

7. Electronic circuit (3) according to one of the preceding claims, wherein the network interface (7) is designed as a network interface (7) for wireless data communication.

8. Electronic circuit (3) according to one of claims 1 to 6, wherein the network interface (7) is designed as a bus interface for a communication bus of the vehicle (1).

9. Electronic circuit (3) according to one of the preceding claims, wherein the electronic circuit (3) is implemented as a microcontroller and/or as a system-on-a-chip, SoC.

10. Electronic circuit (3) according to one of the preceding claims wherein the electronic circuit (3) comprises the non-volatile memory (8).

11. Electronic control unit, ECU, (2) for a vehicle (1), the ECU (2) comprising an electronic circuit (3) according to one of the preceding claims.

12. Method for operating an electronic circuit (3) of a vehicle (1), the method comprising
- receiving at least one data packet representing a software program from a communication network by a hardware component (6) of the electronic circuit (3) including a hardwired logic, which encodes a predefined communication protocol for receiving the at least one data packet;
- storing the software program to a non-volatile memory (8) by the hardware component (6);
- reading the non-volatile memory (8) and to executing the software program by a processing unit (5) of the electronic circuit (3).

13. Method according to claim 12, wherein a further software program is executed by the processing unit (5) while the at least one data packet is received by the hardware component (6).

14. Method according to one of claims 12 or 13, wherein the at least one data packet is received from a server computer via the communication network in a wireless manner.

15. Method according to one of claims 12 or 13, wherein the at least one data packet is received from a computing device external to the vehicle (1) via a communication bus of the vehicle (1).
